# EUROPÄISCHE PATENTSCHRIFT

(11) **EP 4 464 915 B1**
(45) Veröffentlichungstag und Bekanntmachung des Hinweises auf die Patenterteilung: **08.07.2026**
(21) Anmeldenummer: 24174432.5
(22) Anmeldetag: 07.05.2024
(51) Int. Cl.: F16G 5/00, B65G 43/02, G01K 1/024, G01K 11/26, H01Q 1/40, H01Q 9/42

(54) **ELEKTRONIKEINHEIT**
ELECTRONIC UNIT
UNITÉ ÉLECTRONIQUE

(30) Priorität: 12.05.2023 DE 102023204484
(43) Veröffentlichungstag der Anmeldung: 20.11.2024
(73) Patentinhaber: ContiTech Deutschland GmbH, 30175 Hannover (DE)
(72) Erfinder: Lorenz, Eduard, 30175 Hannover (DE); Rosen, Simon, 30175 Hannover (DE); Sattler, Heiko, 30175 Hannover (DE)
(74) Vertreter: Preusser, Andrea

(56) Entgegenhaltungen:
- DE-A1- 102017 206 980
- US-A1- 2022 128 120

## Beschreibung

Die Erfindung betrifft eine Elektronikeinheit mit wenigstens einem Sensor zur Messung wenigstens einer Zustandsgröße eines Bauteils und mit wenigstens einer an den Sensor angebundenen Antenne zur drahtlosen Übermittlung des Messwerts an eine Empfangseinheit. Die Erfindung betrifft außerdem ein bandförmiges Umschlingungsmittel nach dem Oberbegriff des Anspruchs 4 und ein Antriebssystem nach dem Oberbegriff des Anspruchs 7.

Riemen- oder bandförmige Bauteile, etwa Antriebsriemen in kapitalintensiven Maschinen und Anlagen erfordern eine sorgfältige und Schäden vorbeugende Instandhaltung derselben. Daher werden die dort genutzten Antriebsriemen derzeit nach vergleichsweise kurzer Nutzungsdauer ausgewechselt, um die Gefahr von Schäden an den Maschinen oder Anlagen und somit kostspielige Stillstandzeiten zu verringern. Es wurde bereits mehrfach vorgeschlagen, derartige Antriebsriemen mit einer Elektronik auszustatten, welche mit einem entfernt angeordneten Überwachungssystem drahtlos in Verbindung stehen. Die von dieser Elektronik sensorisch erfassten Zustandsdaten des Antriebsriemens werden dazu genutzt, eine riemenzustandsabhängige Wartung der Maschinen oder Anlagen vorzusehen, wodurch im Ergebnis die Anzahl der Stillstandzeiten aus Wartungsgründen reduziert wird.

Werden Antriebsriemen mit solchen elektronischen Einrichtungen ausgestattet, so dass Messgrößen und bzw. oder Identifikationsdaten erfasst und im laufenden Betrieb drahtlos übertragen werden können, so ist also ein abnutzungsgerechter und von Verwechslung sicherer Austausch möglich. Im Betrieb sind jedoch die elektronischen Komponenten im oder am Riemen den üblichen Belastungen in einem Riementrieb ausgesetzt, nämlich Staub, hohen Temperaturen und gerade bei Antriebsriemen wechselnden Dehnungen und Zugbelastungen oder Stauchungen. Mindestens den Belastungen durch Staub und von außen einwirkenden Umgebungseinflüssen wird im Stand der Technik dadurch begegnet, dass die Elektronikbauteile im Antriebsriemen gekapselt sind.

Die US 2022 128 120 A1 betrifft einen mit einer integrierten Sensorik ausgestatten Antriebsriemen, die es ermöglicht, den Zustand, wie z. B. Verschleiß oder Spannung, zu überwachen und diese Informationen drahtlos zu übermitteln. Hierfür weist der Antriebsriemen ein passives RFID-System auf, das diese Daten an ein externes Lesegerät überträgt, ohne dass eine Stromquelle benötigt wird.

So ist aus der DE 10 2009 003 732 A1 ein flexibler Antriebsriemen bekannt, in dessen elastomeren Material eine Tasche ausgebildet ist, in der ein Sensor sowie ein damit elektrisch verbundenes flexibles Piezoelement angeordnet sind. Das flexible Piezoelement erzeugt aufgrund von Riemenbewegungen durch zeitliche Änderung seines Biegeradius elektrische Energieportionen, welche zur Energieversorgung des Sensors dienen. Gemäß einer dortigen ersten Ausführungsform ist das Piezoelement durch Einvulkanisieren fest und unlösbar mit dem Riemenmaterial verbunden. Gemäß einer zweiten Ausführungsform ist vorgesehen, dass der Antriebsriemen eine Tasche aufweist, in die das flexible Piezoelement nach der Vulkanisation des Riemens derart mit dem Sensor und elektrischen Verbindungselementen einsteckbar ist, dass das Piezoelement an die Bewegungen des Riemens im Betrieb angekoppelt ist. Durch die feste Verbindung des Piezoelements mit dem Riemenmaterial wird dieses bei einer betriebsbedingten Bewegung des Riemens zur Energieerzeugung angeregt. Die in dem Material des Riemens ausgebildete Tasche ist nach einem Einstecken des Sensors und des Piezoelements irreversibel verschließbar.

Als nachteilig wird beurteilt, dass das Einvulkanisieren der Elektronik wegen der bis zu 180°C betragenden Vulkanisationstemperatur und des Vulkanisationsdrucks von bis 1,5 MPa diese schädigen kann. Auch das Erzeugen einer Tasche im Material des Antriebsriemens kann unvorteilhaft sein, wenn dadurch die Riemenstruktur geschädigt oder zumindest inhomogen wird. Die letztgenannten Nachteile weist nach diesseitiger Beurteilung auch der aus der DE 10 2010 002 551 A1 bekannte Antriebsriemen auf, bei dem eine Elektronik mit einem RFID-Transponder in das Material des Antriebsriemens einvulkanisiert ist.

Zudem birgt die übliche Herstellung von Riemenwickeln auf einer Riemenaufbautrommel die Gefahr, dass nach dem Vulkanisieren des Wickels bei der daran anschließenden Vereinzelung desselben in separate Antriebsriemen sich die dort eingebaute Elektronik nicht exakt lokalisieren lässt, in dessen Folge die Elektronik durch die zur Vereinzelung notwendigen Schnitte zerstört wird. Dies kann insbesondere dann geschehen, wenn beispielsweise zur Ausbildung von Riemenzähnen Fließprozesse im Wickelmaterial stattgefunden haben und dadurch eine zuvor bekannte Position der Elektronik verändert ist. Zudem kann eine Schädigung der einvulkanisierten Elektronik bei einem Umkrempeln der aus dem Wickel vereinzelten Riemen erfolgen.

Außerdem sind in Antriebsriemen einvulkanisierte Elektronikschaltungen im Betrieb während des Umlaufs des Antriebsriemens an Riemenscheiben sehr häufigen Dehnungen und Stauchungen ausgesetzt. Dasselbe gilt für Elektronikteile, die etwa in Förderbändern eingebaut sind, die über Trommeln oder Rollen über viele Kilometer geführt werden und Schüttgut transportieren. Da üblicherweise die Elektronikteile selbst oder auch die Trägerfolien, auf denen solche Elektronikteile aufgebracht sind, auf Dehnungen und Stauchungen völlig anders reagieren als das umgebende elastomere Material, kann es bei einer zu starken Verbindung zwischen den Elektronikteilen und dem umgebenden Material zu Abrissen oder zu Brüchen in den Schaltungen kommen.

Um die Nachteile des Einvulkanisierens von Elektronikbauteilen zu umgehen ist aus der DE 10 2017 206 980 A1 bekannt, ein Band oder einen Riemen nach dessen Vulkanisation mit einem Elektronikbauteil nachzurüsten, wobei das Elektronikbauteil in einen Hohlraum eines in dem elastomeren Material des Bands oder Riemens eingebetteten rohrförmigen Behältnisses eingeschoben wird.

Zum Erhalt der mechanischen Eigenschaften des elastomeren Materials über die Zeit kann die Überwachung verschiedener Parameter erforderlich sein.

Insbesondere ist es von besonders großer Bedeutung, dass sich die Temperatur des Elastomers innerhalb vorgegebener Toleranzgrenzen bewegt. Da elastomere Werkstoffe vergleichsweise schlechte Wärmeleiter sind, können sich innerhalb des elastomeren Körpers Zonen unterschiedlicher Temperaturen ausbilden. Dies kann insbesondere bei Antriebsriemen mit hoher mechanischer und bzw. oder thermischer Belastung der Fall sein. Somit ist es für eine verlässliche Zustandsüberwachung unter anderem erforderlich, die Temperaturmessung an ihrem Entstehungsort bzw. der Zone mit der höchsten Temperatur zu messen. Die Temperatur kann so möglichst präzise und mit geringer Zeitverzögerung gemessen werden. Hierfür muss der Sensor zumindest in das elastomere Material eingebettet sein und kann je nach Anwendung auch möglichst weit in dem Inneren des elastomeren Körpers positioniert sein.

Nachteiliger Weise hat das die Elektronikeinheit mit dem Sensor und der Antenne umgebene elastomere Material eine das Signal dämpfende Wirkung, sodass eine drahtlose Übermittlung des Messwerts als ein Signal über die Antenne an eine Empfangseinheit außerhalb des elastomeren Körpers beeinträchtigt sein kann. Dies äußert sich dadurch, dass weniger Messwerte pro Zeit übermittelt werden können und bzw. oder die Reichweite der Signalübermittlung zwischen dem der Elektronikeinheit und der Empfangseinheit verringert sein kann. Die Signalqualität kann allgemein über das Signal-Rausch-Verhältnis definiert werden.

Der Erfindung liegt die Aufgabe zugrunde, eine Elektronikeinheit mit einem Sensor und einer Antenne bereitzustellen, wobei der beschriebene Zielkonflikt einer präzisen Messwertermittlung in einem Elastomerkörper, insbesondere einem elastomeren Umschlingungsmittel und einer guten Signalqualität gelöst wird. Zusätzlich oder alternativ soll die Elektronikeinheit geeignet sein, formschlüssig und ohne Zuhilfenahme von weiteren Haftvermittlern in dem Elastomerkörper angeordnet zu werden.

Der Erfindung liegt außerdem die Aufgabe einer Bereitstellung eines bandförmigen Umschlingungsmittels, insbesondere eines Antriebsriemens mit einer Elektronikeinheit unter Erfüllung der zuvor genannten Anforderungen zugrunde.

Die Lösung dieser Aufgabe ergibt sich durch eine Elektronikeinheit mit den Merkmalen des unabhängigen Anspruchs 1.

Weitere vorteilhafte Ausbildungen sind in den abhängigen Ansprüchen offenbart. Die Lösung der Aufgabe ergibt sich weiterhin durch ein bandförmiges Umschlingungsmittel mit einer erfindungsgemäßen Elektronikeinheit mit den Merkmalen des Anspruchs 4 und durch ein Antriebssystem mit den Merkmalen des Anspruchs 7.

Weitere Vorteile und Merkmale sind der allgemeinen Beschreibung sowie den Ausführungsbeispielen zu entnehmen.

Die vorliegende Anmeldung betrifft eine Elektronikeinheit mit wenigstens einem Sensor zur Messung wenigstens einer Zustandsgröße eines Bauteils und mit wenigstens einer an den Sensor angebundenen Antenne zur drahtlosen Übermittlung des Messwerts an eine Empfangseinheit. Die Antenne weist einen in Querrichtung von dem Sensor erstreckenden ersten Abschnitt und einen abgewinkelten, sich im Wesentlichen in vertikaler Richtung erstreckenden zweiten Abschnitt auf.

Der erste Abschnitt und bzw. oder der zweite Abschnitt der Antenne kann als ein beliebiges elektrisch leitfähiges Element, z. B. eine gedruckte Leiterbahn oder eine Leitung ausgebildet sein. Der erste Abschnitt verbindet den Sensor mit dem zweiten Abschnitt der Antenne. Der erste Abschnitt der Antenne kann dabei aus einem anderen elektrisch leitfähigen Element als der zweite Abschnitt der Antenne ausgebildet sein.

Die Elektronikeinheit und die Empfangseinheit können gemeinsam ein Überwachungssystem bilden.

Der Sensor kann einen mit dem Wert der Zustandsgröße korrelierenden Messwert generieren, der über die Antenne der Elektronikeinheit an eine Empfangseinheit außerhalb des Bauteils drahtlos übermittelt werden kann.

Das Bauteil kann vorzugsweise ein Umschlingungsmittel aus polymerem Material, wie etwa ein Fördergurt oder ein Antriebsriemen in unterschiedlichen Ausführungsformen zur kraftschlüssigen oder formschlüssigen Kraftübertragung sein. Übliche Ausführungen des polymeren Materials können Elastomere auf der Basis vulkanisierbarer Kautschukmischungen, umfassend wenigstens eine Kautschukkomponente sowie Mischungsingredienzien, sein. Grundsätzlich können alle der fachkundigen Person bekannten Elastomere verwendet werden. Die Begriffe Kautschuk und Elastomer werden in dieser Schrift synonym verwendet. **In** einer bevorzugten Ausführungsform ist das Elastomer ausgewählt aus einer Gruppe aus Ethylen-Propylen-Mischpolymerisat (EPM) oder Ethylen-Propylen-Dien-Mischpolymerisat (EPDM) oder Nitrilkautschuk (NBR) oder (teil)hydrierter Nitrilkautschuk (HNBR).

Zur Verbesserung der Signalqualität weist die Antenne einen in Querrichtung von dem Sensor erstreckenden ersten Abschnitt und einen abgewinkelten, sich im Wesentlichen in vertikaler Richtung erstreckenden zweiten Abschnitt auf.

Mit anderen Worten kann der zweite Abschnitt in einem Winkel von 45 ° ≤ α ≤ 135 ° zu dem ersten Abschnitt angeordnet sein. Der Sensor kann so auf vorteilhafte Weise für eine präzise und verzögerungsfreie Messwertgenerierung möglichst weit in dem polymeren Material des Bauteils angeordnet sein. Für eine bessere Signalqualität, d.h. mehr Messwerte pro Zeit und bzw. oder ein größeres Signal-Rausch-Verhältnis, kann die Antenne in einen Randbereich des Elektronikbauteils herausgeführt werden. **In** dem Randbereich ist die Antenne von weniger polymerem Material umgeben als im Bereich des Sensors, der bevorzugt weiter von dem Randbereich entfernt innerhalb des Elektronikbauteils bzw. innerhalb eines das Elektronikbauteil umfassenden Bauteils, beispielsweise eines Antriebsriemens, angeordnet ist, sodass eine Abschirmung bzw. Dämpfung des Signals bereits durch eine geringere Schichtstärke des die Antenne umgebenen polymeren Materials verringert werden kann.

Zur Vergrößerung der Abstrahlfläche der Antenne in Querrichtung weist die Antenne den zu dem ersten Abschnitt abgewinkelten zweiten Abschnitt auf. Hierdurch kann die Signalqualität nochmals verbessert werden.

An der Elektronikeinheit sind flexibel verformbare Vorsprünge oder Lamellen zum Ausbilden einer im Wesentlichen formschlüssigen Anordnung in dem Bauteil angeordnet. Genauer gesagt kann die Umhausung des Sensors und der Antenne aus polymerem Material die Vorsprünge oder Lamellen aufweisen. Besonders bevorzugt können sich die Vorsprünge oder Lamellen entlang einer Bewegung der Elektronikeinheit in einer ersten Querrichtung verformen, wodurch das Einschieben der Elektronikeinheit in eine korrespondierende Bohrung eines Bauteils erleichtert werden kann, während die Vorsprünge oder Lamellen entlang einer Bewegung der Elektronikeinheit in einer zweiten Querrichtung nicht bzw. nur weniger stark verformbar sind bzw. einer Verformung einen erhöhten Widerstand entgegensetzen. Für ein leichteres Einschieben der Elektronikeinheit können die Lamellen eine einseitige Fase aufweisen. Entgegen der Vorzugsrichtung der Fase ist die Lamelle nicht bzw. nur weniger stark verformbar. Hierdurch kann die Elektronikeinheit leicht und ohne großen Kraftaufwand in ein Bauteil eingeschoben werden und gleichzeitig gegen ein Verrutschen in einer der Einschubrichtung entgegengesetzten Richtung gesichert werden.

Gemäß einem weiteren Aspekt der vorliegenden Erfindung umfasst die Elektronikeinheit ein polymeres Material, worin der Sensor und die Antenne eingebettet sind.

Der Sensor und die Antenne sind zumindest im Wesentlichen von dem polymeren Material umgeben. Das polymere Material bildet mit anderen Worten eine Umhausung oder ein Gehäuse des Sensors und der Antenne. Der Sensor und die Antenne können durch das polymere Material vor Umwelteinflüssen wie Schmutz und bzw. oder Feuchtigkeit geschützt werden. Vorzugsweise ist das polymere Material ein Elastomer zuvor beschriebener Art.

Gemäß einem weiteren Aspekt der vorliegenden Erfindung ist der Sensor ein Temperatursensor, vorzugsweise ein SAW-Sensor (Surface-Acoustic-Wave Sensor). Auf besonders vorteilhafte Weise können mit einem SAW Sensor Temperaturmessungen in Anwendungen durchgeführt werden, in denen sich die Empfangseinheit und die Elektronikeinheit relativ zueinander bewegen. Mit anderen Worten ist in solchen Anwendungen, wie beispielsweise einen Riementrieb, die Elektronikeinheit nur temporär in dem wirksamen Feld zur Übermittlung des Messwerts an die Empfangseinheit positioniert. Eine Messwertübermittlung von der Elektronikeinheit an die Empfangseinheit sollte schnellstmöglich und unter möglichst geringem Energieaufwand erfolgen, was durch den SAW-Sensor auf vorteilhafte Weise sichergestellt werden kann.

Die vorliegende Anmeldung betrifft außerdem ein bandförmiges Umschlingungsmittel, ausgebildet als Rollen oder Scheiben umlaufendes Trag-, Zug- oder Antriebselement mit einem Körper aus polymerem Material, mit einer in dem Körper angeordneten erfindungsgemäßen Elektronikeinheit, wobei die Elektronikeinheit in eine sich in Querrichtung in dem Körper des Umschlingungsmittels erstreckende Bohrung einschiebbar ist.

Die zuvor genannten Eigenschaften und Vorteile der Elektronikeinheit lassen sich auf vorteilhafte Weise auf ein bandförmiges Umschlingungsmittel übertragen. Insbesondere kann durch die erfindungsgemäße Lösung ein bandförmiges Umschlingungsmittel, insbesondere ein Antriebsriemen, schnell und kostengünstig mit einer Elektronikeinheit, zum Beispiel zur Temperaturmessung des Umschlingungsmittels bzw. Antriebsriemens, nachgerüstet werden.

Gemäß einem weiteren Aspekt der vorliegenden Erfindung schließt eine Flanke der Elektronikeinheit bündig mit einer Flanke des Umschlingungsmittels ab.

Mit anderen Worten ist die Flanke der Elektronikeinheit Teil der Flanke des Umschlingungsmittels. Wenn das Umschlingungsmittel ein Keilriemen ist, dann kann die Flanke der Elektronikeinheit einen Teil der Flanke des Keilriemens bilden und zur Leistungsübertragung zwischen dem Keilriemen und einer Riemenscheibe beitragen. Die Flanke kann in einem Winkel zwischen 45 ° ≤ α ≤ 135 ° zur horizontalen Ebene verlaufen und parallel zu dem zweiten Abschnitt der Antenne angeordnet sein. Der Flankenwinkel der Elektronikeinheit kann dem Winkel der Flanke des Keilriemens übereinstimmend angepasst werden.

Die Leistungsübertragungsfähigkeit des Umschlingungsmittels wird durch die Anordnung der Elektronikeinheit in dem Umschlingungsmittel auf besonders vorteilhafte Weise nicht oder zumindest nur äußerst geringfügig verringert. Dies ist insbesondere dann der Fall, wenn das polymere Material der Elektronikeinheit dasselbe wie das des Umschlingungsmittels ist, wodurch die Flanke des Umschlingungsmittels über den Querschnitt einen gleichbleibenden Reibungskoeffizienten aufweist.

Gemäß einem weiteren Aspekt der vorliegenden Erfindung ist das Umschlingungsmittel ein Antriebsriemen, vorzugsweise ein Keilriemen.

Die zuvor genannten Eigenschaften und Vorteile lassen sich so auf Antriebsriemen übertragen und zeigen sich insbesondere bei Keilriemen als besonders vorteilhaft.

Die vorliegende Anmeldung betrifft außerdem ein Antriebssystem, vorzugsweise einen Riementrieb mit einem erfindungsgemäßen bandförmigen Umschlingungsmittel.

Die zuvor genannten Eigenschaften und Vorteile lassen sich so auf ein Antriebssystem, insbesondere auf einen Riementrieb übertragen. Ein solches Antriebssystem kann zur Leistungsübertragung zwischen wenigstens zwei Wellen z. B. einer landwirtschaftlichen Arbeitsmaschine ausgebildet sein.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 kombinierbar sind.

Ausführungsbeispiele und weitere Vorteile der Erfindung werden nachstehend in Zusammenhang mit den folgenden Figuren schematisch dargestellt und näher erläutert.
Fig. 1 zeigt eine schematische Darstellung der erfindungsgemäßen Elektronikeinheit gemäß eines ersten Ausführungsbeispiels in einer Seitenansicht.
Fig. 2 zeigt eine schematische Darstellung der erfindungsgemäßen Elektronikeinheit aus Fig. 1 in einer Schnittdarstellung.
Fig. 3 zeigt eine schematische Darstellung der erfindungsgemäßen Elektronikeinheit aus Fig. 1 in einer perspektivischen Darstellung.
Fig. 4 zeigt eine schematische Darstellung eines Keilriemens mit einer erfindungsgemäßen Elektronikeinheit gemäß eines zweiten Ausführungsbeispiels in einer Schnittdarstellung.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

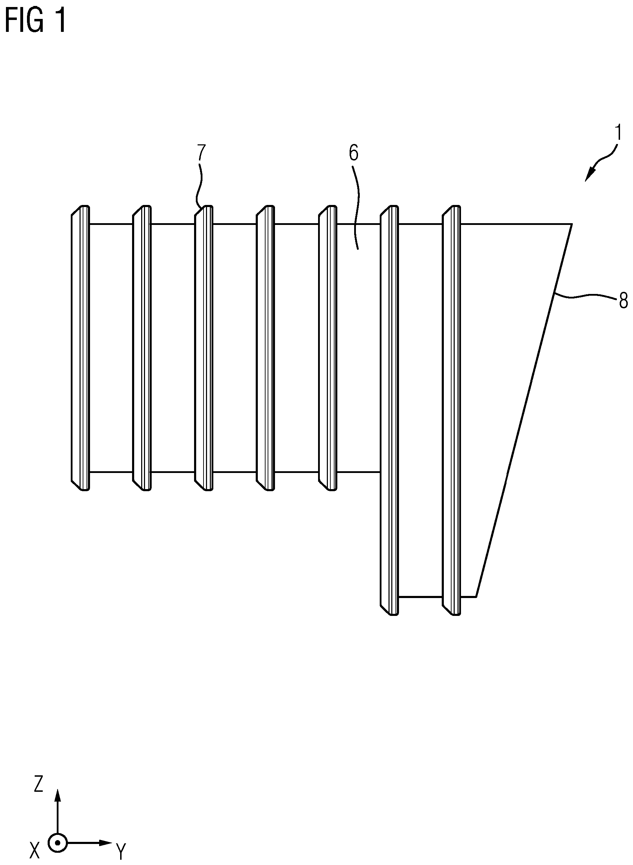

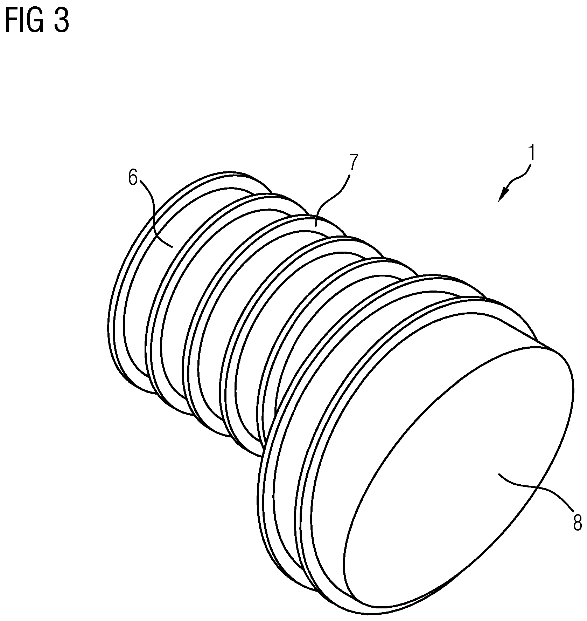

Die erfindungsgemäße Elektronikeinheit 1 ist in Figur 1 gemäß eines ersten Ausführungsbeispiels in einer Seitenansicht dargestellt. Eine perspektivische Darstellung der Elektronikeinheit 1 aus Figur 1 ist der Figur 3 zu entnehmen. Die Elektronikeinheit 1 weist ein Gehäuse aus polymerem Material 6 auf. An der Elektronikeinheit 1 sind flexibel verformbare Vorsprünge oder Lamellen 7 zum Ausbilden einer passgenauen und im Wesentlichen formschlüssigen Anordnung der Elektronikeinheit 1 in einem Bauteil angeordnet. Die dargestellte Elektronikeinheit 1 weist eine Flanke 8 auf. Die Flanke 8 verläuft in dem dargestellten Ausführungsbeispiel in einem Winkel von 75° zur horizontalen Ebene X,Y.

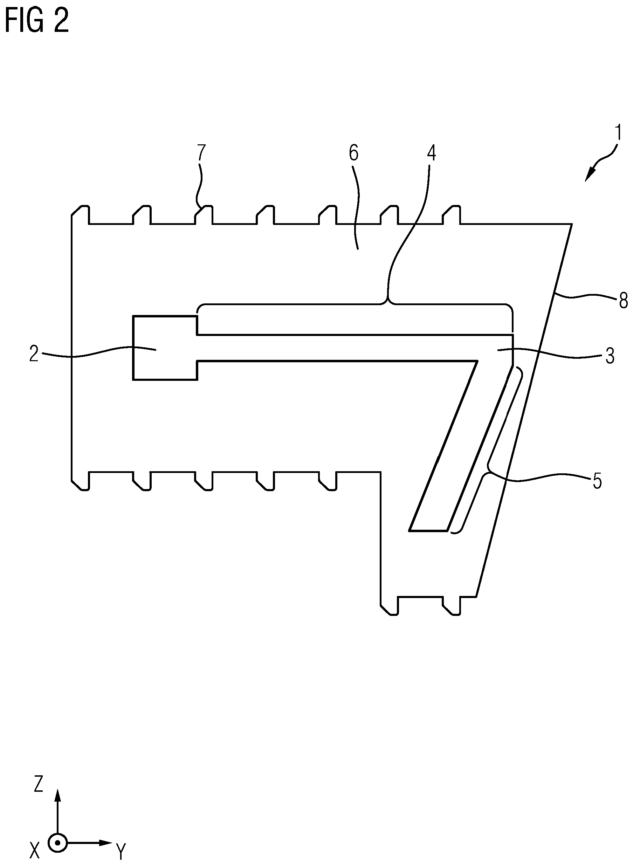

Figur 2 zeigt die Elektronikeinheit 1 der Figur 1 in einer Schnittdarstellung. Die Elektronikeinheit 1 weist einen Temperatursensor 2 und eine an den Sensor 2 angebundene Antenne 3 auf. Die Antenne 3 weist einen in Querrichtung Y von dem Sensor 2 erstreckenden ersten Abschnitt 4 und einen abgewinkelten, sich im Wesentlichen in vertikaler Richtung Z erstreckenden zweiten Abschnitt 5 auf. Der zweite Abschnitt 5 ist in einem Winkel von 70 ° zu dem ersten Abschnitt 4 angeordnet und vergrößert die Abstrahlfläche der Antenne 3 in Querrichtung Y. In dem seitlichen Randbereich ist die Antenne 3 von weniger polymerem Material 6 umgeben als im Bereich des Sensors 2, der bevorzugt weiter von dem Randbereich bzw. der Flanke 8 entfernt innerhalb der Elektronikeinheit 1 angeordnet ist, sodass eine Abschirmung bzw. Dämpfung des Sensorsignals bereits durch eine geringere Schichtstärke des die Antenne 3 umgebenen polymeren Materials 6 verringert wird.

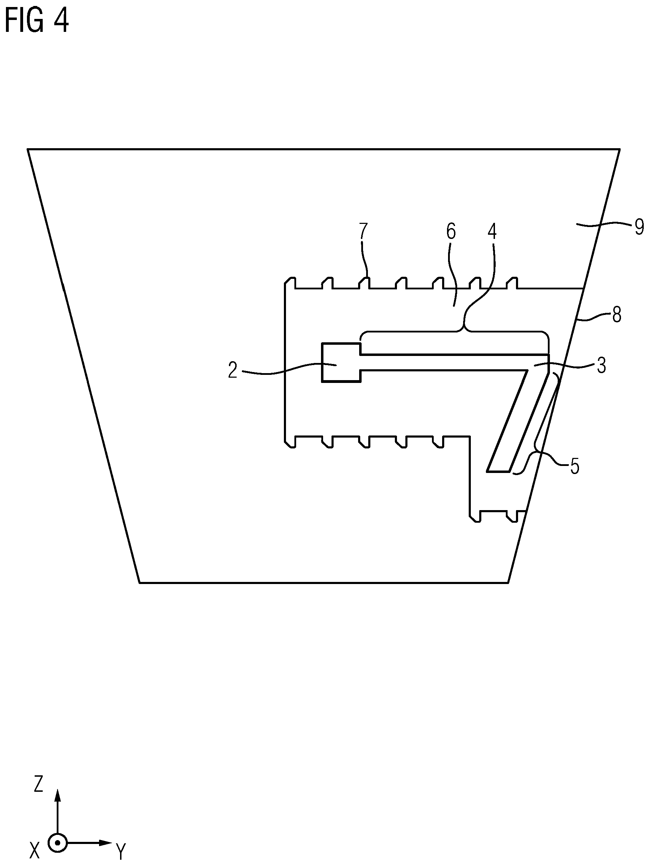

Fig. 4 zeigt eine schematische Darstellung eines Keilriemens 9 mit einer erfindungsgemäßen Elektronikeinheit 1 gemäß eines zweiten Ausführungsbeispiels in einer Schnittdarstellung. Der Keilriemen 9 weist einen Körper aus elastomerem Material auf und umfasst mit Ausnahme der Flanke 8 die Elektronikeinheit 1 im Wesentlichen, die in eine sich in Querrichtung Y in dem Körper des Keilriemens 9 erstreckende Bohrung eingeschoben ist. An der Elektronikeinheit 1 sind flexibel verformbare Vorsprünge oder Lamellen 7 zum Ausbilden einer passgenauen und im Wesentlichen formschlüssigen Anordnung der Elektronikeinheit 1 in dem Keilriemen 9 angeordnet. Die Vorsprünge oder Lamellen 7 sind aus dem polymeren Material 6 ausgebildet und entlang einer Bewegung der Elektronikeinheit 1 in einer ersten Querrichtung Y nach links verformbar, wodurch das Einschieben der Elektronikeinheit 1 in eine korrespondierende Bohrung des Keilriemens 9 erleichtert werden kann, während die Vorsprünge oder Lamellen 7 entlang einer Bewegung der Elektronikeinheit 1 in einer zweiten Querrichtung Y nach rechts nicht bzw. nur weniger stark verformbar sind bzw. einer Verformung einen erhöhten Widerstand entgegensetzen.

Die Flanke 8 der Elektronikeinheit 1 schließt bündig mit einer Flanke des Keilriemens 9 ab. Die Flanke 8 der Elektronikeinheit 1 ist somit Teil der Flanke des Keilriemens 9. Der Temperatursensor 2 ist für eine präzise und verzögerungsfreie Messwertgenerierung möglichst weit in dem Körper des Keilriemens 9 angeordnet. Für eine bessere Signalqualität, d.h. mehr Messwerte pro Zeit und bzw. oder ein größeres Signal-Rausch-Verhältnis, ist die Antenne 3 in einen Randbereich des Elektronikbauteils 1 nahe der Flanke 8 herausgeführt.

### Bezugszeichenliste (Teil der Beschreibung)

- 1: Elektronikeinheit
- 2: Sensor
- 3: Antenne
- 4: Erster Abschnitt
- 5: Zweiter Abschnitt
- 6: Polymeres Material
- 7: Vorsprung / Lamelle
- 8: Flanke
- 9: Keilriemen

- X: Längsrichtung; Tiefe
- Y: Querrichtung; Breite
- Z: vertikale Richtung; Höhe
- Y X,: Horizontalen; horizontale Ebene

## Patentansprüche

1. Elektronikeinheit (1) mit wenigstens einem Sensor (2) zur Messung wenigstens einer Zustandsgröße eines Bauteils und mit wenigstens einer an den Sensor (2) angebundenen Antenne (3) zur drahtlosen Übermittlung des Messwerts an eine Empfangseinheit, wobei die Antenne (3) einen in Querrichtung (Y) von dem Sensor (2) erstreckenden ersten Abschnitt (4) und einen abgewinkelten, sich im Wesentlichen in vertikaler Richtung (Z) erstreckenden zweiten Abschnitt (5) aufweist,
**dadurch gekennzeichnet, dass**
an der Elektronikeinheit (1) flexibel verformbare Vorsprünge oder Lamellen (7) zum Ausbilden einer im Wesentlichen formschlüssigen Anordnung in dem Bauteil angeordnet sind.

2. Elektronikeinheit (1) nach Anspruch 1,
**dadurch gekennzeichnet, dass**
die Elektronikeinheit (1) ein polymeres Material (6) umfasst, worin der Sensor (2) und die Antenne (3) eingebettet sind.

3. Elektronikeinheit (1) nach einem der vorhergehenden Ansprüche,
**dadurch gekennzeichnet, dass**
der Sensor (2) ein Temperatursensor, vorzugsweise ein SAW-Sensor ist.

4. Bandförmiges Umschlingungsmittel, ausgebildet als Rollen oder Scheiben umlaufendes Trag-, Zug- oder Antriebselement mit einem Körper aus polymerem Material, mit einer in dem Körper angeordneten Elektronikeinheit (1) nach einem der vorhergehenden Ansprüche,
wobei die Elektronikeinheit (1) in eine sich in Querrichtung (Y) in dem Körper des Umschlingungsmittels erstreckende Bohrung einschiebbar ist.

5. Bandförmiges Umschlingungsmittel nach Anspruch 4,
**dadurch gekennzeichnet, dass**
eine Flanke (8) der Elektronikeinheit (1) bündig mit einer Flanke des Umschlingungsmittels abschließt.

6. Bandförmiges Umschlingungsmittel nach einem der Ansprüche 4 oder 5, **dadurch gekennzeichnet, dass**
das Umschlingungsmittel ein Antriebsriemen, vorzugsweise ein Keilriemen (9) ist.

7. Antriebssystem, vorzugsweise Riementrieb mit einem bandförmigen Umschlingungsmittel nach einem der Ansprüche 4 bis 6.

## Claims

1. Electronic unit (1) comprising at least one sensor (2) for measuring at least one state variable of a component, and at least one antenna (3) connected to the sensor (2) for wireless transmission of the measured value to a receiving unit, wherein the antenna (3) comprises a first section (4) extending from the sensor (2) in a transverse direction (Y) and an angled second section (5) extending substantially in a vertical direction (Z), **characterised in that**
flexibly deformable protrusions or fins (7) for forming a substantially form-locking arrangement in the component are arranged on the electronic unit (1).

2. Electronic unit (1) according to claim 1,
**characterised in that**
the electronic unit (1) comprises a polymeric material (6), in which the sensor (2) and the antenna (3) are embedded.

3. Electronic unit (1) according to one of the preceding claims, **characterised in that**
the sensor (2) is a temperature sensor, preferably a SAW sensor.

4. Belt-shaped wrapping means, designed as a traction, conveying or drive element circulating around rollers or pulleys, having a body made of a polymeric material, with an electronic unit (1) according to one of the preceding claims arranged in the body, wherein the electronic unit (1) can be inserted into a bore extending in a transverse direction (Y) within the body of the wrapping means.

5. Belt-shaped wrapping means according to claim 4,
**characterised in that**
one flank (8) of the electronic unit (1) is flush with a flank of the wrapping means.

6. Belt-shaped wrapping means according to one of claims 4 or 5, **characterised in that** the wrapping means is a drive belt, preferably a V-belt (9).

7. Drive system, preferably a belt drive, with a belt-shaped wrapping means according to one of claims 4 to 6.

## Revendications

1. Unité électronique (1) comprenant au moins un capteur (2) destiné à mesurer au moins une grandeur d'état d'un composant, ainsi qu'au moins une antenne (3) reliée au capteur (2) pour la transmission sans fil de la valeur mesurée vers une unité de réception, l'antenne (3) comportant une première section (4) s'étendant à partir du capteur (2) dans une direction transversale (Y) et une seconde section (5) coudée, s'étendant sensiblement dans une direction verticale (Z), **caractérisée en ce que** des saillies ou lamelles (7) déformables de manière flexible, destinées à former un assemblage essentiellement à ajustement de forme dans le composant, sont disposées sur l'unité électronique (1).

2. Unité électronique (1) selon la revendication 1, **caractérisée en ce que** l'unité électronique (1) comprend un matériau polymère (6), dans lequel le capteur (2) et l'antenne (3) sont incorporés.

3. Unité électronique (1) selon l'une quelconque des revendications précédentes, **caractérisée en ce que** le capteur (2) est un capteur de température, de préférence un capteur SAW.

4. Moyen d'enroulement en forme de bande, conçu comme un élément porteur, tracteur ou d'entraînement circulant autour de rouleaux ou de poulies, comprenant un corps en matériau polymère, dans lequel est disposée une unité électronique (1) selon l'une quelconque des revendications précédentes, l'unité électronique (1) pouvant être insérée dans un perçage s'étendant dans une direction transversale (Y) dans le corps du moyen d'enroulement.

5. Moyen d'enroulement en forme de bande selon la revendication 4, **caractérisé en ce que** un flanc (8) de l'unité électronique (1) est à fleur d'un flanc du moyen d'enroulement.

6. Moyen d'enroulement en forme de bande selon l'une des revendications 4 ou 5, **caractérisé en ce que** le moyen d'enroulement est une courroie d'entraînement, de préférence une courroie trapézoïdale (9).

7. Système d'entraînement, de préférence une transmission par courroie, comprenant un moyen d'enroulement en forme de bande selon l'une quelconque des revendications 4 à 6.
